# EUROPEAN PATENT SPECIFICATION

(11) **EP 3 467 208 B1**
(45) Date of publication and mention of the grant of the patent: **19.08.2020**
(21) Application number: 18020485.1
(22) Date of filing: 04.10.2018
(51) Int. Cl.: E02D 31/02, E01C 13/02, E01C 3/00, E01C 3/06

(54) **SAFETY BOSSED MEMBRANE FOR LANDFILLS**
GENOPPTE SICHERHEITFOLIE FÜR DEPONIEN
MEMBRANES DE SECURITE AVEC PAPULES POUR DÉCHARGES

(30) Priority: 09.10.2017 IT 201700112845
(43) Date of publication of application: 10.04.2019
(73) Proprietor: Tema - Technologies And Materials SRL, 31029 Vittorio Veneto (TV) (IT)
(72) Inventor: Busatta, Nicola, I-31015 Conegliano (TV) (IT); Cais, Federico, I-31020 San Vendemiano (TV) (IT)
(74) Representative: Spagnolo, Chiara

(56) References cited:
- EP-A1- 1 807 573
- EP-A1- 2 322 726
- WO-A1-97/24495
- WO-A1-2013/150459
- DE-U1-202006 001 699
- US-A1- 2003 156 905

## Description

The present invention relates to a safety draining membrane, of the bossed type, for landfills, mines or tunnels; said membrane, of plastic material, enables drainage and waterproofing under heavy loads, it being provided with high-resistance hollow protrusions, which are intended to limit the mechanical stresses on the interface layers; an embodiment variant is also provided, which is particularly suitable for the application with steep slopes.

### Field of the invention

The invention finds specific application in the building industry and particularly in the sector of semi-finished components for civil or environmental engineering works, as for example the thin membranes intended for the waterproofing and drainage of landfills, mines or tunnels; in particular, the draining membrane according to the invention finds preferred, but not exclusive, application on the bottom of landfills, acting as a waterproofing barrier and layer for the collection of leaks, thus ensuring high resistance to compression and also protecting the interface layers. More broadly speaking, the membrane according to the invention is intended for the waterproofing of underground sites or buildings, separating them from the adjacent layers, also in association with other materials.

Nowadays, in the building sector, different types of membranes are widespread, either single or multi-layer, having various purposes: for example, one should remember the vapour membranes, waterproofing bituminous membranes, draining membranes, separating membranes, geomembranes and separating sheets of non-woven fabric. In particular, the thin membranes of the bossed type, which are also known as honeycomb membranes, and which are generally waterproof, are widely used in civil and environmental engineering works; they consist of a thin layer of plastic material provided with hollow protrusions obtained in superficial continuity, like cylindrical or frustoconical bosses or bosses shaped as a truncated pyramid arranged in a regular pattern, in such a way as to increase the distance between the lower layer and the upper layer, that is to say, acting as spacers. Basically, they are used to create an empty interspace between the layers for the purpose of insulating and/or facilitating the drainage of the permeated liquids; the latter, in fact, can flow down in a substantially natural way in the interspace obtained from said protrusions, going down according to the slope to a lower level where a collection element or collector is generally placed, in such a way as to safely convey said liquids outside the building or towards disposal devices.

In the prior art, among the most widespread bossed membranes used by the operators of the building sector one should remember, for example, those marketed under the name Platon, by the Norwegian company Isola AS - Porsgrunn, www.isola.no, or those marketed under the name Tefond by the Italian company TeMa Technologies and Materials Srl - www.temacorporation.com; the latter, in particular, have frustoconical bosses with a flat head for support that, along the edges, have rounded edges in such a way as to facilitate the overlapping on the joints, wherein they are also provided with an adhesive bead that continuously seals them to perform waterproofing on very damp grounds or under artificial waterways.

From a production point of view, a bossed membrane of the above-discussed type can be industrially obtained by extruding a sheet of plastic material, then forming it on a roller whose surface is provided with protruding bosses, which is also called bossed forming roller. In more detail as to said extrusion, there is a gravimetric feeding system that automatically measures out the raw materials directly into the hopper, through which they enter the extruder where the melting takes place, to be then uniformly distributed around said forming roller. The so melted plastic material by means of a depression drips and adheres temporarily to the bossed surface of the roller, in such a way as to take the same bossed shape and also to reproduce the same smooth surface in the zones between one boss and the other. The so formed membrane then passes through some thermal conditioning cylinders towards a storage tower, to be finally conveyed to the cutting, rolling and packaging zone. Should a base layer also be provided, said non-woven fabric can be advantageously coupled during the manufacturing process of the sheet, for example by conveying it already stretched on the just formed product, in such a way as to exploit the remaining heat of the sheet and create multiple hot melt points in correspondence of the head of the bosses; as an alternative, it is possible to stick the cold fabric by means of adhesives applied in beads or in drops.

The most suitable raw materials for this type of processing are the resins of the type called olefins, and in particular polyethylene, which can be low-density, medium-density or even high-density, being respectively called LDPE, MDPE and HDPE, generally HDPE for high-resistance membranes; as an alternative, polypropylene, also known by the acronym PP, or thermoplastic polyolefins, also known by the acronym TPO are also suitable. In some cases polystyrene is also used, which is known by the acronym PS. Such raw materials can be new or reclaimed, the latter being derived from the reclaim of products in the post-production or post-consumption phase.

Recently, the companies operating in the civil and environmental engineering sector have proposed new products, also known as geocomposites, aimed at improving the insulation of some underground venues, such as landfills, mines and tunnels, where waterproofing and draining operations are delicate and expensive. In particular, said new solutions aim at increasing drainage and/or at limiting the thickness of the layer and/or at reducing damage for any leak or damage to the layers; furthermore, said new solutions aim at increasing the safe duration of the application and at limiting the overall costs of the application. Nowadays, among the most effective underground draining solutions, one provides a draining mat of plastic filaments or a three-dimensionally shaped net or still improved solutions of bossed membranes, which are generally interposed between a filtering layer and a waterproof layer or between two filtering layers. Said geocomposites for underground drainage are sometimes called geospacers and comprise a three-dimensional core, which is intended to obtain a gap that lets the fluids drain.

By way of example only, among the commercially available solutions of underground insulating or draining membranes, we would like to recall the insulating polypropylene barrier called Barrier Bento 4, by said Italian company TeMa Technologies and Materials Srl, which is based on powdered natural sodium bentonite enclosed between two geotextile layers of non-woven fabric. One should also remember the composite draining membrane for landfills marketed under the name T-Drain from the same company, which is of the HDPE polyethylene geonet type with a PP sheet coating and a waterproofing film. Moreover, we would also like to recall the geocomposite for planar drainage and ventilation called Newdrain, by the Italian company Geosintex Srl - www.geosintex.com, consisting of a draining core of extruded monofilaments having an isometric bubble or parallel channel morphology, which is coupled by thermowelding to one or two filtering and separating geotextiles. Among the multi-layer membranes for the environmental sector, one should also remember the draining geocomposite called B-Drain 500 by said Italian company TeMa Technologies and Materials Srl, consisting of a bossed 500 g/m² HDPE sheet coupled in line to a geotextile of non-woven polypropylene having a filtering function. Finally, for particular applications where high draining capability is required, one should remember the bicuspid honeycomb membrane of PS by the same Italian company called T-Kone HD.

Among said draining geocomposites, solutions are also known that are suitable for safety applications with heavy loads, for dangerous or contaminated sites, for example to intercept and drain the waters optionally permeated between the layers of landfills or mines like a saving layer; among the most widespread solutions, in particular, one should remember the draining geospacer called Leakdrain S by the English company ABG Limited www.abgltd.com, which consists of a cusp-shaped sheet of HDPE having a high compressive strength where the bosses are close to each other and are small-sized to ensure a high compressive strength with a small thickness, for example of 3.5 or 6 mm and available in various weights, or the membrane called Pozidrain by the same English company where on the head of the bosses of said geospacer a filtering PP layer is coupled; furthermore, for such safety applications also known and widespread are the draining membranes respectively called Hi Drain, by the South African company Acquatan Pty Ltd www.aquatan.com, or Protexia, by the English company Geofabrics Ltd www.geofabrics.com.

The present invention aims at proposing an improved solution of a safety bossed membrane, of the draining and waterproofing type, flexible, having a small overall weight and thickness, which in particular withstands very heavy loads and simultaneously prevents localised tears on the interface layers, with a deformable head, like a damper - shock absorber; said draining and protective membrane being inexpensive, easy to produce and easy to lay.

### Prior art

For the purpose of determining the prior art related to the proposed solution a conventional check was made, searching public archives, which has led to find some prior art documents, among which:
D1: US4789578 (Twyford et al.)
D2: US6691472 (Hubert)
D3: EP2322726 (Droog)
D4: EP1807573 (Bamforth) and
D5: WO 97/24495 A1 (Oldroyd Systemer AS) disclosing a bossed membrane provided with small-sized bosses shaped as a truncated pyramid, identical to each other and arranged in a regular matrix with a high distribution density.

D1 describes a protective waterproof membranous sheeting, which is intended to prevent the passage of water and corrosive salt solutions into structures; it comprises a bituminous adhesive waterproof layer, which has, adhered to the upper face, a protection layer consisting of a flexible polymeric grid. Said grid includes a plurality of continuous and protruding strands that extend in two directions, transverse to each other, in such a way as to strengthen said waterproof layer and to protect it from localised loads, forming drainage channels.

D2 proposes a composite membrane for foundations, which is intended to protect from moisture and to drain water, which has an outer surface contacting the ground that is waterproof, smooth and continuous, and an inner surface that remains adherent to the foundation; the invention consists of a honeycomb sheet provided with protrusions in the form of frustoconical bosses or bosses shaped as a truncated pyramid with a flat head and a central recess, with an outer waterproof sheet covering the cavities of said protrusions and a double-sided adhesive sheet applied on the opposite side on the flat heads of the bosses in such a way as to adhere to the foundation wall in case of land subsidence. The invention also provides continuous stiffening, having a minimum height and shaped as half-tubes, arranged in parallel in correspondence of said bosses on the base wall that supports said waterproof sheet.

D3 proposes a high-resistance bossed membrane, obtained by thermoforming a sheet, with high protrusions having a circular base of the ogival type, with concave walls in such a way as to taper in correspondence of the head, which is rounded in the form of a cap; alternative shapes of said bosses are also provided, with the head flattened at the end and holed.

D4 proposes a multi-layer product for use in waterproofing or containment of liquids, gases or solids, which is particularly suitable for sealing landfills and tunnels; there is provided a waterproof or semipermeable membrane of the bossed type, with optional geotextile layers coupled above and below said membrane, which enables the drainage of fluids through the space obtained between the protrusions. The bosses are hollow protrusions with a circular base and tapered at the head, also in the form of a rounded cusp, in such a way as to facilitate the joining between portions of membrane by means of partial overlapping, to form a continuous welded barrier as well.

In light of what has been found in patent literature and in professional practice, it is thus reasonable to consider as known the following solutions of a membrane for waterproofing and/or draining underground civil or environmental engineering works:
- a sheet of plastic material with cylindrical or frustoconical protrusions or protrusions shaped as a truncated pyramid, also called bossed membrane;
- an optional filtering and/or waterproofing layer, associated above and/or below said sheet, in such a way that the permeated fluids flow in the interspace created by said bosses;
- a multi-layer waterproof draining membrane, with bosses having a flat head to facilitate support and/or coupling, wherein along the edges the protrusions have a different arrangement and shape with rounded edges for the purpose of the overlapping between the portions of membrane, with optional sealing beads;

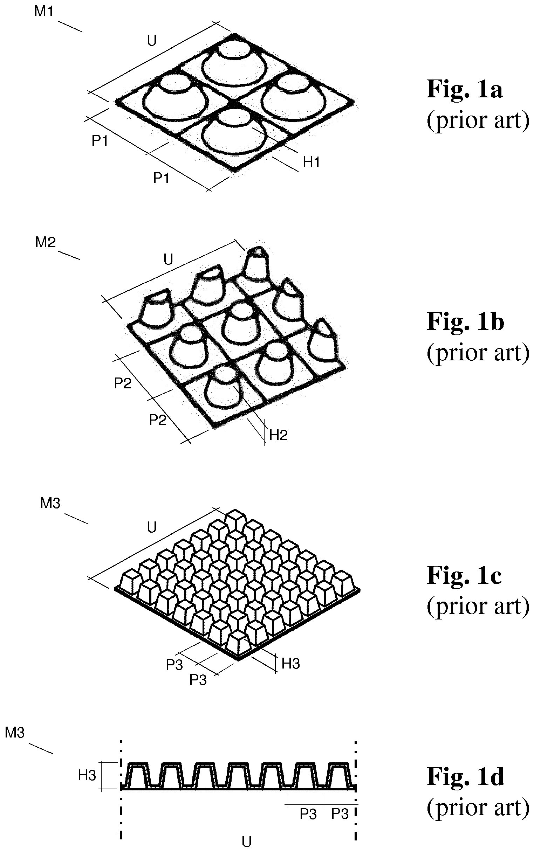

- a waterproof draining membrane with bosses and stiffening ribs;
- a waterproof draining membrane with bosses having a circular base with a tapered and rounded head, in the form of an ogive as well;
- a waterproof draining membrane of the bossed type suitable for underground under-load applications, with frustoconical bosses having a flat head with an overall height of about 7.5 mm and a centre to centre distance of 26 mm with a distribution density of about 1600/m², see for example the figure relating to the prior art (Fig. 1a), or with frustoconical protrusions having a flat head with an overall height of about 10 mm and a centre to centre distance of 20 mm with a distribution density of about 2500/m², as for example the figure relating to the prior art (Fig. 1b). Said membranes respectively having a weight between 500 g/m² and 800 g/m², and a weight between 700 g/m² and 1000 g/m², for a compressive strength between 100 and 500 kN/m²;
- a waterproof membrane with small-sized bosses shaped as a truncated pyramid i.e. having an overall height between 3 mm and 6 mm, having a maximum distribution density of about 20000/m², a weight between 500 g/m² and 1200 g/m², particularly suitable for landfills and heavy loads, with a compressive strength between 900 kN/m² and 2000 kN/m² depending on said weight, as for example in the figures relating to the prior art (Figs. 1c, Id).

### Drawbacks

To conclude, we have observed that the known solutions described have some drawbacks or anyway some limits.

Generally speaking, all the conventional solutions of bossed membranes or three-dimensional geocomposites for drainage can be improved if applied as a thin safety layer in dangerous and/or contaminated sites, as it is nowadays provided for landfills and mines. Firstly, among the closest solutions in patent literature, and in professional practice as well, as for example in the figures relating to the prior art (Figs. 1a, 1b, 1c, 1d), there is the problem of providing rigid and extremely resistant protrusions. In more detail, there is a need for high resistance in small thickness, in such a way as to support the heavy load provided by said applications without yielding instantaneously, that is to say, without collapsing, thus hindering the outflow; on the contrary, there is a simultaneous need of adsorbing localised loads in such a way that the protrusions do not affect or damage the interface layers, that is to say, in such a way that they are partially yielding. In fact, the operators of the sector know that the draining membranes with extremely rigid bosses cause excessive mechanical stresses on the underlying layers, as sometimes occurs in landfills, where there is the formation of tears on the main waterproofing layer with consequent leachate infiltration and/or leakage. From the experiments it was observed that one of the main causes of said tears is the geometric shape of said bosses, rigid and with a substantially flat head little rounded on the edges, since it is the upper end of a cylinder, a parallelepiped or a truncated cone, designed to facilitate support and/or coupling.

Secondly, it was observed that some thin, flexible draining membranes for the building sectors, with filtering layers, are little resistant from a structural point of view and often have localised crushing that hinders the outflow of the liquids. Furthermore, it was observed that the solutions with superficial stiffening elements, as for example in D1, are not suitable for heavy loads, large sizes and high drainage capability as, on the other hand, is necessary for landfill applications. Moreover, they are very expensive and difficult to be laid in correspondence of the joints.

Thirdly, it was observed that in the stiffened bossed membranes with continuous projections on the sheet, as for example in D2, said projections are aimed at exerting a generic reinforcing action of the membrane but are not aimed at preventing the crushing of the bosses with a consequent obstruction in drainage, under heavy loads, nor do they prevent the known problem of cracks on the interface layer due to said flat-headed bosses with a small area and sharp edges, thus not being suitable for landfills.

Fourthly, it was observed that the solutions of a bossed membrane with protrusions having a circular-based body with curved and tapered walls on the head like a rounded tip, as in D3, aim at maximizing the compressive strength of the boss to ensure drainage under heavy loads, and also aim at facilitating moulding operations; however, the proposed solution is of the rigid type and does not allow the head of the boss to partially yield and/or progressively deform, like a damper, as it is instead desirable to distribute point loads and prevent cracks. Furthermore, it was generally observed that a solution of a boss having a circular base facilitates the geometric integration of a cap-like rounded head but, however, has a lower compressive strength with respect to the bosses having a body shaped as truncated pyramid.

Fifthly, it was observed that the solutions of a draining bossed membrane with protrusions having a circular base and tapered on the head, as in D4, facilitate the overlapping of portions of membrane, that is to say, the laying in protection continuity, and are also more resistant than the conventional cylindrical bosses. However, such bosses are very rigid and also have a substantially pointed shape that can create the known damage on the main waterproof membranes. Such a problem is particularly serious in the case of landfills, where the cracks or perforations cause leachate leakage and environmental pollution.

Hence the need for the companies of the sector to find solutions that are more effective with respect to the existing solutions; the aim of the present invention is also to solve the described drawbacks. In particular, there is a need for a safety draining membrane for landfills, mines or tunnels of the cost-effective type, easy to be produced industrially, having a small overall thickness, flexible, simple to be made and laid, superimposable along the edges with no need for sealing to form a continuous draining and waterproof layer, which membrane ensures a very high localised compressive strength and that, at the same time, is progressively yielding starting from the head of the boss, like a damper or shock absorber, in such a way as to prevent the known phenomenon of point tears on the interface layers. Therefore, with respect to the known and conventional solutions, there is a need for an anti-crack bossed membrane having a greater compressive strength or an equal compressive strength but having lower weight and costs. Furthermore, such a bossed membrane should facilitate the safe laying on steep slopes, with greater friction, i.e. grip, on the back face, that it to say, without slipping on the slope.

### Short description of the invention

These and other aims are achieved by the present invention according to the characteristics as in the appended claims, solving the above-mentioned problems by means of a safety bossed membrane (10a, 10b) for landfills, mines or tunnels, which enables drainage and waterproofing under heavy loads, consisting of a plastic sheet with small-sized hollow bosses (100), arranged in a regular pattern with a density higher than 25000 bosses/m²; they have a combined shape, with a body (101) shaped as a truncated pyramid and a head (102) in the form of a deformable spherical cap, interlocked and connected to each other in such a way as to be progressively yielding, to uniformly redistribute the loads, to facilitate drainage and to prevent cracks on the interface layers. The head (102) has on the inside a progressive reduction in the thickness of the material, like a neck (111), that makes it yielding in a uniform and progressive way, while the base (103) is stiffened. In a variant of the invention (10b), for steep slopes, the lower surface is provided with aligned non-slip projections (116) between the openings (108).

### Aims

In this way, by the considerable creative contribution the effect of which constitutes an immediate technical progress, various advantages are achieved.

A first aim consists in realizing a safety bossed membrane of the draining and waterproofing type, for landfills, mines or tunnels, which is intended to be installed under heavy loads although it has an overall thickness and weight that are considerably smaller than all the currently used known and conventional solutions; the proposed membrane, thanks to the particular shape and arrangement of the bosses, provides an extremely high compressive strength although it is lightweight and flexible, with remarkable advantages in the purchase, transport and installation thereof.

A second aim, linked to the first one, consists in making said safety bossed membrane with progressively yielding bosses starting from the head, and in the end collapsing at the base, in such a way as to uniformly redistribute concentrated loads and prevent localised obstructions, which limit the draining function.

A third aim consists in making said safety bossed membrane in such a way as to reduce the mechanical stresses on the interface layers, thanks to the particular configuration of the head of the bosses, progressively yielding like a damper or shock absorber, in such a way as to prevent the known phenomenon of localised tears on the main waterproofing layer above or on the other layers.

A fourth aim consists in industrially obtaining the above-mentioned advantages, with large production volumes and low costs.

These and other advantages will appear from the following detailed description of some preferred embodiments, with the aid of the schematic drawings enclosed, whose details of execution are not to be considered limitative but only illustrative.

### Content of the drawings

Figures 1a, 1b and 1c schematically show, in an axonometric projection, portions of three different bossed membranes (M1, M2, M3) of plastic sheet for underground and landfill applications, according to the prior art; respectively, as a non-exhaustive example, please consider said membrane Platon by the company Isola AS - Porsgrunn, said membrane Tefond by the company TeMa Technologies and Materials Srl, and said membrane Leakdrain by the English company ABG Limited. The membranes of Figures 1a and 1b are provided with frustoconical bosses arranged with a regular pitch, wherein in the first one (M1) the overall thickness (H1) is of about 7.5 mm with a pitch P1 of 26 mm for a distribution density of about 1600 bosses/m², while in the second one (M2) the overall thickness (H2) is of about 20 mm with a pitch P2 of 20 mm for a density of about 2500 bosses/m². In the membrane of Figure 1c (M3), on the other hand, the bosses are shaped as a truncated pyramid and the overall thickness (H3) is of about 5 mm with a pitch P3 of about 7.4 mm for a distribution density of about 19000 bosses/m²; Figure 1d is a cross-section of the previous portion of membrane (M3), in correspondence of the bosses. The views are schematic; in order to facilitate understanding, said portions of membrane have the same size, conventionally being square with a unitary side (U) of 52 mm.

Figure 2a shows, in an axonometric projection, a portion of bossed membrane of plastic sheet according to the present invention; the bosses are frustoconical with a head in the form of a spherical and deformable cap, for an overall thickness (H4) of less than 7 mm, for example 5 mm, and a pitch (P4) at most of 6.8 mm, that is to say, with about 64 bosses per said square portion of unitary side (U) of 52 mm, for a distribution density higher than 25000 bosses/m². Figure 2b is an enlarged detail of the previous Figure 2a.

Figure 3a is an orthogonal top view of a portion of the bossed membrane provided by the invention; Figure 3b refers to the section plane X1-X1 as in the previous view. Figure 3c is an enlarged detail of the single boss, as in the hatched circle in the previous view.

Figure 4a is a schematic axonometric view, with sharp edges, of the geometries that generate the boss provided by the invention, where internally the overall dimensions of the punch shaped as a truncated pyramid that forms the inner surface are shown with a hatched line; Figure 4b shows the boss shaped as a finished product.

Figure 5 is an orthogonal view from the bottom of the portion of bossed membrane as in said Figure 2.

Figures 6a and 6b refer to an embodiment variant of the invention, with non-slip projections that protrude from the lower surface; Figure 6a refers to the section plane X2-X2 as in the following view from the bottom, that is to say, Figure 6b.

Figure 7 shows an axonometric detail, seen from the bottom, of said embodiment variant with non-slip projections as in the previous Figures 6a and 6b.

Figure 8 is a Cartesian two-dimensional diagram that represents experimental values of compressive strength (Rc), depending on the weight (Pm) of the membrane, relating to tests performed according to the ASTM D1621-16 standard on the bossed membrane according to the invention (10a, 10b), which are also compared with the corresponding tests performed on said conventional prior art membranes (M1, M2, M3).

### Practical realization of the invention

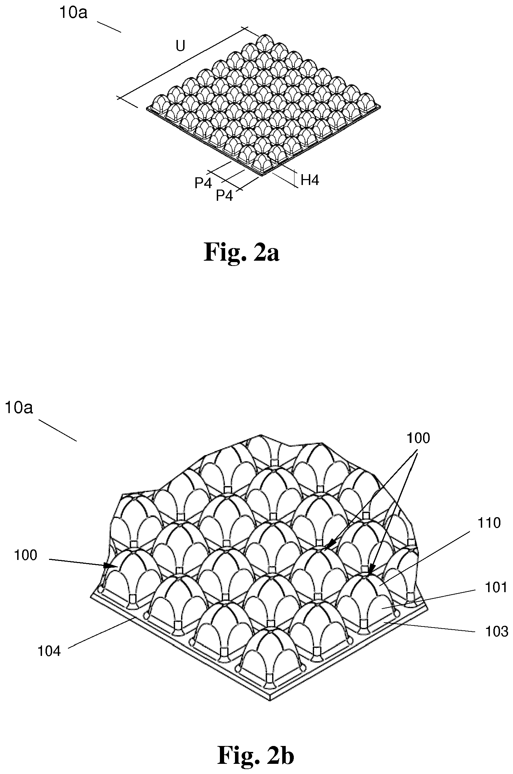

With reference to the Figures (Figs. 2-8) as well, the present invention relates to a safety draining and waterproofing bossed membrane (10a, 10b) for landfills, mines or tunnels, which enables efficient drainage and waterproofing under heavy loads, with high compressive strength, and which at the same time limits the mechanical stresses on the interface layers, preventing cracking thereof. The proposed membrane includes hollow protrusions shaped as a truncated pyramid and particularly configured for protection purposes and for progressive yielding, as described hereinafter. Said protrusions, which are conventionally called bosses (100), are small-sized, identical to each other, and are arranged in a regular pattern with a reduced pitch (P4) with respect to the conventional solutions in such a way as to obtain a very high distribution density, i.e. higher than 25000 bosses/m²; the overall thickness (H4) of the finished membrane is between 3 mm and 7 mm, with a weight between 400 g/m² and 1500 g/m². Said membrane is made of a plastic sheet (104) having a thickness (S1) between 0.45 mm and 1.6 mm, of HDPE, PP or a mixture thereof.

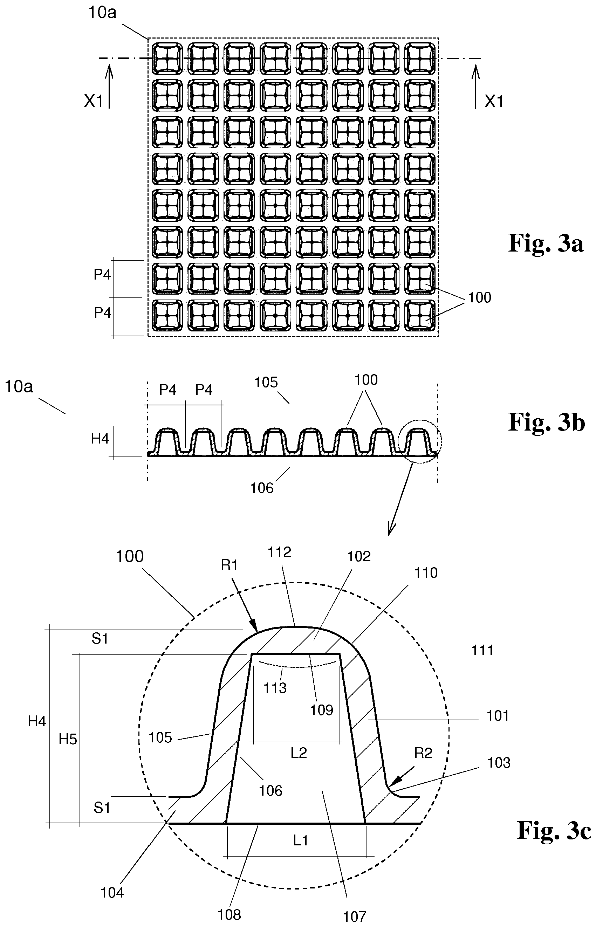

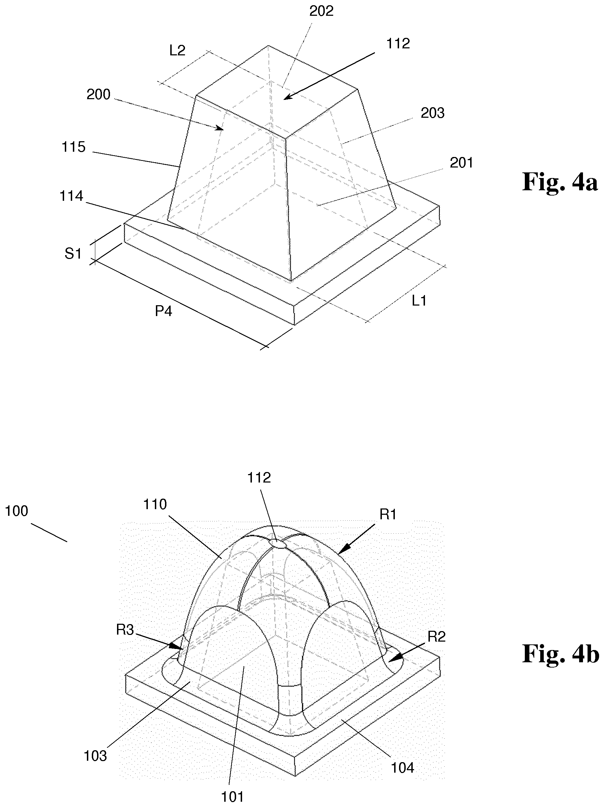

It was observed that the large number of bosses (100) per square metre (Figs. 3a, 3b), by increasing the contact points with respect to all the currently available membranes for the same purpose, provides the combined advantage of ensuring a higher compressive strength than said conventional solutions, as in the known prior art, and also of limiting point stresses on the interface layers; in order to maximize both the anti-crack effect of the interface and the anti-crushing effect of the bossed membrane, with a uniform distribution of localised loads, according to the invention the head (102) of each boss (100) is deformable and is externally shaped as a cap, that is to say, rounded like a dome. In accordance with the aims of the invention, for the purposes of an optimal structural behaviour of the boss, a body shaped as a truncated pyramid (101) is provided on which a cap (110) rests whose bending radius is about half the size of the side of the lower base of the truncated pyramid itself, as described in detail hereinafter (Figs. 3c, 4a, 4b).

In general, in an underground application such as in a landfill, the bossed membrane is laid in contact with layers of bentonite or GCL, or also HDPE sheets having a thickness of about 2 mm used as waterproofing elements. In professional practice it was observed that the presence of an even large number of protrusions having a conventional shape with a flat, non-rounded head can damage such layers with the known punching or piercing effect; said cap shape of the boss, as provided by the invention, prevents said damage and also allows the fluids to move better. Furthermore, the cap provides the capability to absorb a compressive stress more effectively with respect to a pointed or flat-headed protrusion, like a shock-absorbing effect.

In more detail, the boss (100) has the head (102) in the form of a spherical cap (110), that is to say, externally rounded like a semi-spherical dome resting on a truncated pyramid in such a way as to be externally joined in correspondence of the rounded side edges, tangent to them, that is to say, in rounding continuity (Figs. 2b, 4b); basically, said head on the outside appears like a ribbed vaulted dome on a square plan, being laterally cut by the flat walls of a truncated pyramid. The bottom (109) of the cavity (107) is flat and is such as to create on the sides a reduction in the thickness (S1) of the plastic material like a neck (111) that results in the progressive deformation of the boss (100) under load. The particular combination of shape, size, material, thickness and distribution of the bosses (100) allows the proposed membrane (10a, 10b) to uniformly redistribute the loads among the bosses, with the following combined effects: anti-collapse, that is to say, anti-crushing of the bosses, anti-obstruction for the purpose of drainage continuity and anti-crack of the interface layers.

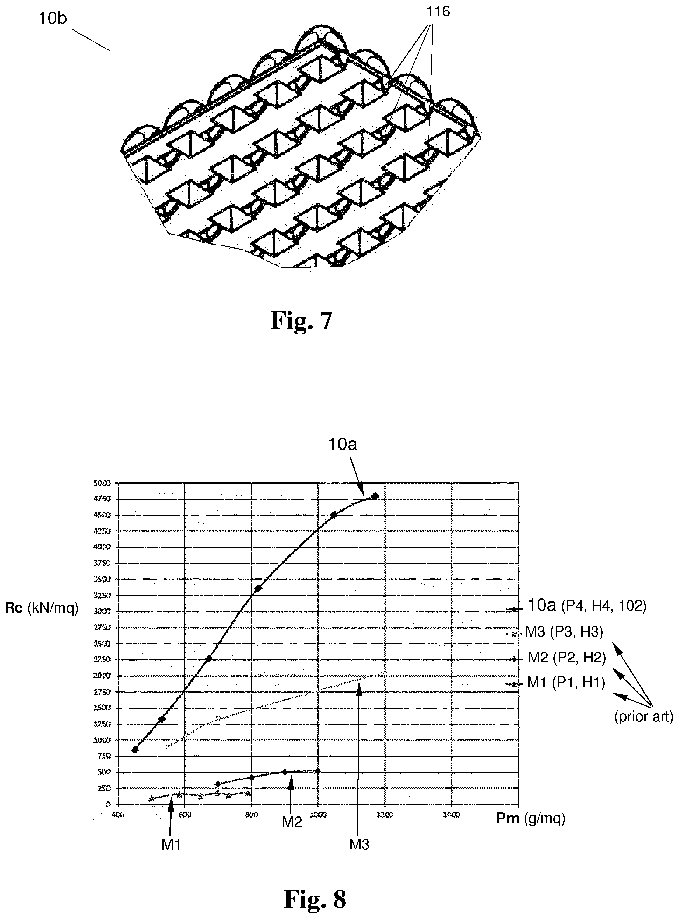

The membrane according to the invention (10a, 10b) (Figs. 2-7) particularly provides a higher compressive strength than the conventionally used membranes, as in the most used prior art examples (Figs. 1a, 1b, 1c, 1d); such an advantage allows, for example, to ensure greater protection and safety and also allows to considerably reduce the weight and the cost of the membrane, facilitating its transport and laying. Experimental tests (Fig. 8) on compressive strength (Rc), depending on the weight (Pm) of the membrane, performed in compliance with the ASTM D1621-16 standard on the bossed membrane according to the invention (10a, 10b), have demonstrated the effectiveness of the proposed solution obtaining, with the same weight (Pm), always higher experimental values of said strength (Rc) with respect to said conventional prior art membranes (M1, M2, M3), wherein the first sample (M1) (Fig. 1a) has frustoconical bosses having an overall thickness (H1) of about 7.5 mm and a pitch (P1) of 26 mm, for a distribution density of about 1600 bosses/m², while the second sample (M2) (Fig. 1b) has frustoconical bosses having an overall thickness (H2) of about 10 mm and a pitch (P2) of 20 mm, for a density of about 2500 bosses/m²; the third sample (M3) (Figs. 1c, 1d) has bosses shaped as a truncated pyramid having an overall thickness (H3) of about 5 mm and a pitch (P3) of about 7.4 mm, for a density of about 19000 bosses/m². On the other hand, the sample of the draining and protective membrane according to the invention (10a, 10b) has said bosses (100) shaped as a truncated pyramid with a rectangular base and rounded edges, with the head (110) externally shaped as a deformable cap (102), according to the described modes and aims, having an overall thickness (H4) of about 5 mm and a pitch (P4) of about 6.5 mm, for a density higher than the conventional solutions, and namely of about 25600 bosses/m².

In the two-dimensional diagram (Fig. 8), which shows the values of said tests, for example, please note that in the samples of medium weight (Pm), that is to say, of about 700 g/m² having a thickness of the sheet (S1) of about 0.7 mm, the obtained compressive strength (Rc) values are almost double with respect to the most resistant prior art membrane (M3); please also note that in said conventional membrane (M3) the known problem of punching on the interface layers has been observed sometimes, wherein, on the other hand, said problem has been solved in the membrane according to the invention (10a, 10b). It was thus observed that said spherical cap distributes the load in a more uniform way with respect to the conventional flat-headed protrusions, thus increasing compressive strength thanks to the initial squeezing of the spherical surface, followed by that of the base shaped as a truncated pyramid, obtaining an effective shock-absorbing and protective effect.

In more detail as to a preferred embodiment (10a) (Figs. 2-5), there is provided a distribution density of said bosses (100) higher than 25000 bosses/m², about 25600 bosses/m², with a pitch (P4) between 6 mm and 6.8 mm, for example 6.5 mm, and with about 64 bosses in a square portion of the membrane having a side of 52 mm, wherein the single boss (100) has a combined shape made up of a body (101) shaped as a truncated pyramid, with flat walls, which acts as a rigid load-bearing structure on which a head (102) in the form of a deformable spherical cap rests, wherein said body and head (101, 102) are interlocked and connected to each other in such a way as to be progressively yielding if subjected to a concentrated load; said boss (100) yielding first in correspondence of said head (102) and only in the end being squeezed at the base (103) of said body (101), like a damper - shock absorber, in such a way as to uniformly redistribute the loads among the bosses (100) and prevent them from collapsing, also with an anti-obstruction effect for the purpose of drainage and an anti-crack effect of the interface layers.

In particular (Figs. 4a, 4b), said boss (100) has the inner surface of the cavity (106, 107) entirely shaped as a regular truncated pyramid since it is obtained by forming said sheet (104, S1) around a punch (200) shaped as a truncated pyramid with a rectangular base, having the greater base (201) that corresponds to the opening (108) of the cavity (107) and the smaller base (202) that forms the flat bottom (109) of said cavity, while on the opposite face of the head (102, 105) the outer surface is a spherical cap (110) in such a way as to form on the inside (102, 106, 107) a progressive reduction in the thickness of the material like a neck (111) that makes it yielding in a uniform and progressive way. Therefore, the thickness of the head (102) is at most equal to the thickness of the sheet (S1) in the centre near the upper support (112) and, laterally, where it is joined to the body (101, 115). At the base (103) of said boss (100) the outer edges (114) have a radius (R2) that is greater with respect to the natural shrinkage of the material (R3) in such a way as to stiffen the base (103) with respect to the body (101).

In more detail as to the shape of the boss (Figs. 4a, 4b), it is provided that said truncated pyramid, corresponding to the inner surface of the cavity (200, 106, 107), has the larger base (201, 108) with the sides (L1) having a length of 3.4 mm with a tolerance of ± 1 mm, while the smaller base (202, 109) has the sides (L2) having a length of 2 mm with a tolerance of ± 0,5 mm, wherein the distance (H5) between said bases (201, 202) is of 4.5 mm with a tolerance of ± 1.5 mm, with the edges (203) rounded according to the natural shrinkage of the material. Said spherical cap (110) has a radius (R1) equal to half said larger side (L1), with a tolerance of ± 10%, and is joined on the side edges (115) of said body (101) shaped as a truncated pyramid, they (115) being preferably rounded according to the natural shrinkage of the material (R3), that is to say, of about 0.5 mm considering a medium thickness of the sheet. With such a rounding and with a suitable stretching of the material, as described hereinafter, one obtains a cap (110, R1) that correctly surmounts said punch (200) shaped as a truncated pyramid, joining in a tangent way said rounded side edges (R3), that is to say, in superficial continuity outside said body (101), like a ribbed vault on a square-based drum. Moreover, at the base (102) of said boss (100), the outer edges (114) have a radius (R2) equal to about half said side (L1) of the larger base (201) of the punch shaped as a truncated pyramid, with a tolerance of ± 0,5 mm, or preferably of about 1.7 mm.

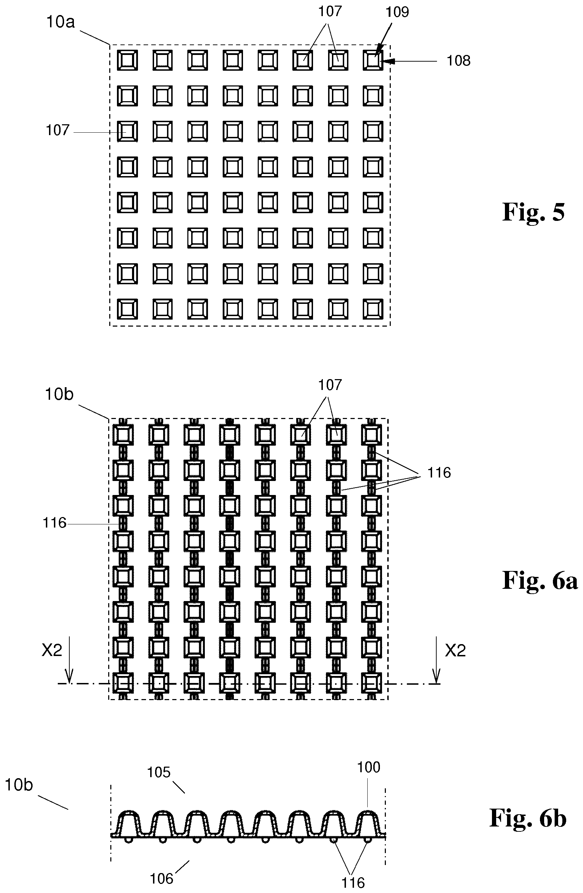

In an embodiment variant (10b) (Figs. 6a, 6b, 7), which is particularly suitable for the laying on steep slopes, the above-described membrane (Figs. 2-4) is not completely smooth (Fig. 5) in the back surface (106) but has, in correspondence of the supporting plane, that is to say, excluding said cavities (107) (Fig. 6a), multiple non-slip projections (116), which are preferably shaped as small protrusions with a toroidal portion (Figs. 6b, 7) like protruding fins aligned along a centreline axis of said boss (100), wherein said projections are parallel to each other and discontinuous since they are interrupted by said openings (107, 108). Said non-slip projections (116) have dimensions in thickness and width, considered in cross-section (Fig. 6b) in the point of maximum protrusion, that is to say, in the centre of each projection (116), having a value between once and twice the thickness (S1) of said sheet (104), in such a way as to improve the adhesion of the membrane to the underlying layers, facilitating laying on walls or very steep slopes, as for example occurs on the side flanks in landfills. It was observed in practice that such a solution, during laying, allows to increase the friction of said bossed membrane on the interface layers, such as the bentonite layers or the HDPE sheets, preventing sliding and ensuring continuous protection.

The process for industrially obtaining the above-described bossed membrane (10a, 10b, 100) includes the following operating steps: first of all, extruding said plastic material in such a way as to form a thin sheet (104), according to the thickness (S1) corresponding to the weight (Pm) of the finished membrane, and namely the planned grammage; then forming said sheet around a forming roller provided with protrusions acting as forming punches (200), which are shaped as a regular truncated pyramid and are arranged in a pattern with a constant pitch (P4), with a height (H4) between said bases (201, 202) that is such as to obtain the desired overall thickness (H5), according to the desired weight. For example (Figs. 4a, 4b), for a finished product having a weight of about 700g/m², a thickening (S1, H4) is provided on said punch shaped as a truncated pyramid (200, H5), which is centrally equal to 0.73 mm with a tolerance of +/- 0.25 mm.

In particular, the variation in thickness of the head (102, 109, 110) for the purpose of said deformation (113) and of said progressive yielding, as provided by the invention, can be industrially obtained by employing vacuum rotary rollers and stretching the extruded material around the smaller base (202, 109) of said punch (200) during the rotation, deforming it and thinning it in such a way as to obtain a rounded outer surface in the form of a spherical cap while the upper end, of support (112) for the external interface, has the greater thickness (S1), that is to say, it is substantially equal to the thickness of the sheet (104). It was observed that such a shape of the head (102), with the outer surface (105, 110) different from the inner surface (106, 109) and with necks (111) that weaken it making it yielding in a controlled way and adaptable with an easy set-up of the production equipment, is not obtained by forming, that is to say, no external forming die is provided. To this purpose, in the known solutions closest to the invention, such as the solution M3 with small-sized bosses as in the figures of the prior art (Figs. 1c, 1d), it was observed that the thickness of the material is substantially constant since they are substantially obtained by flat forming of a hot sheet, for example on a plate with protrusions on which a die for the counter-forming of the sheet, like moulding, is lowered.

The bossed membrane according to the invention (10a, 10b) shaped as described above (100, 101, 102, 109, 110, 111, 113, L1, L2, H4, H5, P4, R1, R2, R3) (Figs. 2-7) experimentally obtains (Fig. 8) compressive strength (Rc) values, in accordance with the ASTM D1621-16 standard, between about 800 kN/m² and about 4800 kN/m² depending on the weight (Pm) or on the thickness (S1) of the plastic sheet, the first value being obtained with a thickness (S1) of about 0.45 mm or a weight (Pm) of about 450 g/m² while the second value is obtained with a thickness (S1) of about 1.2 mm and a weight (Pm) of about 1150 g/m², wherein the intermediate values are directly proportional to the variation in thickness, considering a tolerance of ± 15%. See, for example, the Cartesian diagram (Fig. 8) that highlights the experimental results referring to samples of said proposed membrane (10a) in various weights (Pm), and namely of about 450 g/m², 550 g/m², 700 g/m², 800 g/m², 1050 g/m² and 1150 g/m², respectively.

It was thus observed in professional practice that the safety draining and waterproofing membrane (10a, 10b) according to the invention achieves the planned aims, considerably improving the insulation and the protection of underground works such as, in particular, landfills, mines or tunnels. The proposed solution, as a non-exhaustive example, is particularly suitable for forming a draining and protective layer on the bottom and on the flanks of landfills for the collection of leachate and/or of groundwater, as well as intended to form a draining layer between the topsoil and the membranes or covering layers of said landfills. Moreover, it is suitable for the collection and evacuation of biogases that are formed under the covering layer, and is also intended to form an effective layer of control or safety below any other draining layer, waterproof layer or any other layer with particular technical functions. More broadly speaking, it was observed that it simplifies the making and the protection of any draining excavations and/or waterproofing systems and/or systems for stopping capillary rising damp on grounds.

### Reference

(10a, 10b) safety bossed membrane according to the invention, of the draining and waterproofing type, for landfills, mines or tunnels, in the basic version with a smooth support surface (10a) or in the version with non-slip projections (10b) for steep slopes;
(100) boss of the membrane according to the invention, internally hollow, having a combined shape;
(101) body shaped as truncated pyramid;
(102) head in the form of a deformable spherical cap;
(103) base;
(104) plastic sheet;
(105) outer surface of the membrane or outer face, with bosses;
(106) lower surface of the membrane or support face, with open cavities;
(107) opening of the inner cavity of the boss;
(108) larger base of the truncated pyramid, corresponding to the opening of the cavity;
(109) smaller base of the truncated pyramid, corresponding to the bottom of the cavity and also to the inner surface of the head;
(110) spherical cap, corresponding to the outer surface of the head;
(111) neck;
(112) outer support;
(113) deformation of the head on the inside, under load;
(114) outer edge at the base of the boss;
(115) outer edge on the body;
(116) non-slip projection, on the lower surface;
(200) overall dimensions of the punch shaped as a truncated pyramid that forms the inner surface of the boss;
(201) larger base of the punch;
(202) smaller base of the punch;
(203) side edge of the punch;
(HI, H2, H3) overall thickness of prior art bossed membranes (Figs. 1a, 1b, 1c and 7), being for example (HI, M1) of 7.5 mm and (H2, M2) of 10 mm and (H3, M3) of 5 mm.
(H4) thickness of the bossed membrane according to the invention;
(H5) distance between the larger and the smaller base, that is to say, depth of the cavity;
(L1, L2) dimension of the base side of the truncated pyramid that forms the inner surface of the boss, where (L1) is the side of the larger base and (L2) is the side of the smaller base;
(M1, M2, M3) reference bossed membranes, as in the known prior art, wherein (M1) has an overall thickness (H1) of 7.5 mm with frustoconical protrusions having a centre to centre distance (P1) of 26 mm and a distribution density of about 1600 bosses/m², and wherein (M2) has an overall thickness (H2) of 10 mm with frustoconical protrusions having a centre to centre distance (P2) of 20 mm and a distribution density of about 2500 bosses/m², while (M3) has an overall thickness (H3) of about 5 mm with protrusions shaped as a truncated pyramid having a centre to centre distance (P3) of about 7.4 mm and a distribution density of about 19000 bosses/m².
(PI, P2, P3, P4) pitch, that is to say, centre to centre distance between the protrusions arranged in a pattern, respectively referring to the first (PI, M1), to the second (P2, M2) and to the third (P3, M3) membrane as in the known prior art (Figs. 1a, 1b, 1c and 7), being respectively of 26 mm, 20 mm and 7.4 mm. (P4) refers, on the other hand, to the bossed membrane according to the invention (10a, 10b) wherein said pitch is between 6 mm and 6.8 mm;
(Pm) weight of the bossed membrane;
(Rc) compressive strength of the bossed membrane;
(R1) radius of the spherical cap, on the outside on the head;
(R2) base radius, on the outer edge;
(R3) bending radius according to the natural shrinkage of the material;
(S1) thickness of the plastic sheet.
(U) unitary side of a square portion of bossed membrane, in the reference figures being conventionally of about 52 mm.

## Claims

1. Safety draining and waterproofing bossed membrane (10a, 10b) for landfills, mines or tunnels, having a weight between 400 g/m² and 1500 g/m², of a plastic sheet (104) having a thickness (S1) between 0.45 mm and 1.6 mm of HDPE, PP or mixtures thereof, provided with small-sized bosses (100) shaped as a truncated pyramid, identical to each other and arranged in a regular pattern with a high distribution density; said bossed membrane (10a, 10b) having an overall thickness (H4) between 3 mm and 7 mm; said bossed membrane (10a, 10b) being **characterised in that** it has a distribution density of said bosses (100) that is higher than 25000 bosses/m², with a pitch (P4) between 6 mm and 6.8 mm, wherein the single boss (100) has a combined shape being made up of a body (101) shaped as a truncated pyramid that acts as a rigid load-bearing structure and of a head (102) in the form of a deformable spherical cap (110), which (101, 102, 110) are interlocked and connected to each other in such a way as to be progressively yielding if subjected to a concentrated load; said boss (100) yielding first in correspondence of said head (102) and only in the end being squeezed at the base (103) of said body (101), like a damper - shock absorber, in such a way as to uniformly redistribute the loads among the bosses (100) and prevent them from collapsing, also with an anti-obstruction effect for the purpose of drainage and an anti-crack effect of the interface layers; said boss (100), with the inner surface of the cavity (106, 107) entirely shaped as a regular truncated pyramid, being obtained by forming said sheet (104, S1) around a punch shaped as a truncated pyramid (200) with a rectangular base, having the larger base (201) corresponding to the opening (108) of the cavity (107) and the smaller base (202) constituting the flat bottom (106, 109) of said cavity, while on the opposite face of the head (102, 105) the outer surface is a spherical cap (110) in such a way as to form on the inside (102, 106, 107) a progressive reduction in the thickness of the material (111) like a neck that makes it yielding in a uniform and progressive way; said thickness of the head (102) being at most equal to the thickness of the sheet (S1) in correspondence of the upper support (112), and laterally where it is connected to the body (101, 115) and wherein, at the base (103) of said boss (100), the outer edges (114) have a radius (R2) that is greater with respect to the natural shrinkage of the material (R3) in such a way as to stiffen the base (103) with respect to the body (101).

2. Bossed membrane (10a, 10b) according to claim 1, **characterised in that** said truncated pyramid, corresponding to the inner surface of the cavity (200, 106, 107), has the larger base (201, 108) with the sides (L1) having a length of 3.4 mm with a tolerance of ± 1 mm, while it has the smaller base (202, 109) with the sides (L2) having a length of 2 mm with a tolerance of ± 0.5 mm, wherein the distance (H5) between said bases (201, 202) is of 4.5 mm with a tolerance of ± 1.5 mm, with rounded edges (203) according to the natural shrinkage of the material; and wherein said spherical cap (110) has a radius (R1) that is equal to half said larger side (L1), with a tolerance of ± 10%, and is connected on the side edges (115) of said body (101) shaped as a truncated pyramid, which are rounded according to the natural shrinkage of the material (R3); and wherein, at the base (103) of said boss (100), said outer edges (114) have said radius (R2) equal to half said side (L1) of the larger base (201), with a tolerance of ± 0.5 mm; and wherein said pitch (P4) between said bosses (100) is of 6.5 mm, with a distribution density of 25600 bosses/m² and such as to obtain 64 bosses in a square portion of membrane having a side of 52 mm, said values being considered with a tolerance of ± 5%.

3. Bossed membrane (10a, 10b) according to claims 1 and 2, **characterised in that** it has a compressive strength (Rc), according to the ASTM D1621-16 standard, which is between 800 kN/m² and 4800 kN/m² depending on said thickness (S1) of the plastic sheet (Fig. 8), the first value being obtained with a thickness (S1) of 0.45 mm and the second value with a thickness (S1) of 1.2 mm, respectively, wherein the intermediate values are directly proportional to the variation in thickness with a tolerance of ± 15%.

4. Bossed membrane (10b) according to claim 1 or 2 or 3, **characterised in that** it has the lower surface (106) in a bearing condition, which is provided with multiple non-slip projections (116) aligned along a centreline axis of said boss (100), which are parallel to each other and discontinuous since they are interrupted by said openings (107, 108).

5. Bossed membrane (10b) according to the previous claim, **characterised in that** said non-slip projections (116) are shaped as small protrusions with a toroidal portion (Figs. 6b, 7), that is to say, rounded and protruding fins, both transversely and longitudinally; said non-slip projections (116) having a variable thickness and width that are, considered in cross-section at the point of maximum protrusion, in the centre of each projection (116), between once and twice the thickness (S1) of said sheet (104).

6. Bossed membrane (10a, 10b) according to at least one of the previous claims, **characterised in that** it is industrially obtained by a process comprising the following operating steps: first extruding said plastic material in such a way as to form a thin sheet (104), according to the thickness (S1) corresponding to the weight (Pm) of the finished membrane, and then forming said sheet around a forming roller provided with protrusions acting as forming punches (200), which are shaped as a regular truncated pyramid and are arranged in a pattern with a constant pitch (P4), there being a height (H4) between said bases (201, 202) that is such as to obtain the desired overall thickness (H5), according to the desired weight; and wherein the variation in the thickness of the head (102, 109, 110) for the purpose of deformation (113) and of progressive yielding is obtained with a vacuum rotary roller and by stretching the extruded material around the smaller base (202, 109) of said punch (200) during the rotation, deforming it and thinning it with necks (111) in such a way as to obtain a rounded outer surface in the form of a spherical cap (110) while the upper end has the greater thickness (S1, 112), that is to say, it is substantially equal to the thickness of the sheet (104).

## Patentansprüche

1. Genoppte Sicherheitsentleerungs- und Abdichtungsmembran (10a, 10b) für Deponien, Minen oder Tunnel mit einem Gewicht zwischen 400 g/m² und 1500 g/m² einer Kunststofffolie (104) mit einer Dicke (S1) zwischen 0,45 mm und 1,6 mm HDPE, PP oder Gemischen der beiden Materialien, versehen mit kleinen Noppen (100), die als Pyramidenstumpf geformt sind, miteinander identisch sind und in einer regelmäßigen Matrix mit hoher Verteilungsdichte angeordnet sind; wobei die genannte genoppte Membran (10a, 10b) eine Gesamtdicke (H4) zwischen 3 mm und 7 mm aufweist; wobei die genannte genoppte Membran (10a, 10b) **dadurch gekennzeichnet ist, dass** sie eine Verteilungsdichte der genannten Noppen (100) aufweist, die höher als 25000 Noppen/m² ist, mit einem Abstand (P4) zwischen 6 mm und 6,8 mm, wobei der einzelne Noppe (100) eine Form des kombinierten Typs aufweist, die aus einem Körper (101) besteht, der als Pyramidenstumpf geformt ist, der als starre tragende Struktur wirkt, und aus einem Kopf (102) mit einer verformbaren Kugelkappe (110), die (101, 102, 110) miteinander verriegelt und verbunden sind, so dass sie bei konzentrierter Belastung zunehmend nachgeben; wobei der genannte Noppe (100) zuerst in Übereinstimmung mit dem genannten Kopf (102) nachgibt und erst am Ende an der Basis (103) des genannten Körpers (101) zusammengedrückt wird, wie ein Absorber - Stoßdämpfer, so dass die Belastungen gleichmäßig auf die Noppen (100) verteilt werden und ein Zusammenfallen verhindert wird, auch mit einer Anti-Verstopfungs-Wirkung zum Zwecke der Entwässerung und einer Anti-Riss-Wirkung in Richtung der Grenzflächenschichten; der genannte Noppe (100), wobei die Innenfläche des Hohlraums (106, 107) vollständig als regelmäßiger Pyramidenstumpf geformt ist, wird erhalten, indem die genannte Folie (104, S1) um einen Stempel herum geformt wird, der als Pyramidenstumpf (200) mit einer rechteckigen Basis geformt ist, wobei die größere Basis (201) der Öffnung (108) des Hohlraums (107) entspricht und die kleinere Basis (202) den flachen Boden (106, 109) des genannten Hohlraums bildet, während auf der gegenüberliegenden Fläche des Kopfes (102, 105) die Außenfläche eine Kugelkappe (110) ist, so dass auf der Innenfläche (102, 106, 107) eine fortschreitende Verringerung der Dicke des Materials (111) entsteht, wie bei einer Einschnürung, die es auf gleichmäßige und progressive Weise nachgiebig macht; wobei die Dicke des Kopfes (102) höchstens gleich der Dicke der Folie (S1) in Übereinstimmung mit der oberen Stütze (112) ist und seitlich, wo es mit dem Körper (115) verbunden ist, und wobei an der Basis (103) der genannten Noppen (100) die Außenkanten (114) einen Radius (R2) aufweisen, der in Bezug auf die natürliche Schrumpfung des Materials (R3) größer ist, so dass die Basis (103) in Bezug auf den Körper (101) versteift wird.

2. Genoppte Membran (10a, 10b) nach Anspruch 1, **dadurch gekennzeichnet, dass** der genannte Pyramidenstumpf, der der Innenfläche des Hohlraums (200, 106, 107) entspricht, die größere Basis (201, 108) hat, mit den Seiten (L1) mit einer Länge von 3,4 mm mit einer Toleranz von ± 1 mm, während es die kleinere Basis (202, 109) hat, wobei die Seiten (L2) eine Länge von 2 mm mit einer Toleranz von ± 0,5 mm haben, wobei der Abstand (H5) zwischen den genannten Basen (201, 202) 4,5 mm mit einer Toleranz von ± 1,5 mm beträgt, mit abgerundeten Kanten (203) entsprechend der natürlichen Schrumpfung des Materials; und wobei die genannte Kugelkappe (110) einen Radius (R1) hat, der gleich der Hälfte der genannten größeren Seite (L1) ist, mit einer Toleranz von ± 10%, und an den Seitenkanten (115) des genannten Körpers (101) verbunden ist, der als Pyramidenstumpf geformt ist, die entsprechend der natürlichen Schrumpfung des Materials gerundet sind (R3); und wobei an der Basis (103) der genannten Noppe (100), die genannten Außenkanten (114) den Radius (R2) haben, der gleich der Hälfte der Seite (L1) der größeren Basis (201) mit einer Toleranz von ± 0,5 mm ist; und wobei der genannte Abstand (P4) zwischen den genannten Noppen (100) 6,5 mm beträgt, mit einer Verteilungsdichte von 25600 Noppen/m² und derart, dass 64 Noppen in einem quadratischen Abschnitt der Membran mit einer Seite von 52 mm erhalten werden; wobei die genannten Werte mit einer Toleranz von ± 5% berücksichtigt werden.

3. Genoppte Membran (10a, 10b) nach den Ansprüchen 1 und 2, **dadurch gekennzeichnet, dass** sie eine Druckfestigkeit (Rc) gemäß der Norm ASTM D1621-16 aufweist, die zwischen 800 kN/m² und 4800 kN/m² liegt, abhängig von der Dicke (S1) der Kunststofffolie (Fig. 8), wobei der erste Wert mit einer Dicke (S1) von 0,45 mm und der zweite Wert mit einer Dicke (S1) von 1,2 mm erhalten wird, wobei die Zwischenwerte mit einer Toleranz von ± 15% direkt proportional zur Dickenänderung sind.

4. Genoppte Membran (10b) nach Anspruch 1 oder 2 oder 3, **dadurch gekennzeichnet, dass** sie die untere Fläche (106) in einem Lagerzustand aufweist, die mit mehreren rutschfesten Erhebungen (116) versehen ist, die entlang einer Mittellinienachse der genannten Noppen (100) ausgerichtet sind, die parallel zueinander und diskontinuierlich sind, da sie durch die genannten Öffnungen (107, 108) unterbrochen werden.

5. Genoppte Membran (10b) gemäß dem vorherigen Anspruch, **dadurch gekennzeichnet, dass** die genannten rutschfesten Erhebungen (116) als kleine Vorsprünge mit einem Ringabschnitt (Fig. 6b, 7) oder als abgerundeten und hervorstehenden Rippen sowohl quer als auch in Längsrichtung geformt sind; wobei die genannten rutschfesten Erhebungen (116) eine variable Dicke und Breite aufweisen, die im Querschnitt am Punkt des maximalen Vorsprungs in der Mitte jeder Erhebung (116) zwischen ein- und zweimal der Dicke (S1) der genannten Folie (104) liegen.

6. Genoppte Membran (10a, 10b) nach mindestens einem der vorherigen Ansprüche, **dadurch gekennzeichnet, dass** sie industriell durch ein Verfahren erhalten wird, das die folgenden Betriebsschritte umfasst: ein erstes Extrudieren des genannten Kunststoffmaterials, so dass eine dünne Folie (104) entsprechend der Dicke (S1) gebildet wird, die dem Gewicht (Pm) der fertigen Membran entspricht, und dann Formen der genannten Folie um eine Formwalze, die mit Vorsprüngen versehen ist, die als Formstempel (200) wirken, die als regelmäßige Pyramidenstümpfe geformt sind und in einer Matrix mit einer konstanten Teilung (P4) angeordnet sind, wobei zwischen den genannten Basen (201, 202) eine Höhe (H4) besteht, die so ist, dass die gewünschte Gesamtdicke (H5) entsprechend dem gewünschten Gewicht erhalten wird; und wobei die Änderung der Dicke des Kopfes (102, 109, 110) zum Zweck der Verformung (113) und der fortschreitenden Nachgiebigkeit mit einer Vakuumrotationswalze und durch Strecken des Materials erhalten wird, das während der Drehung um die kleinere Basis (202, 109) des genannten Stempels (200) extrudiert wird, Verformen und Ausdünnen mit Einschnüren (111), so dass eine als Kugelkappe (110) abgerundete Außenfläche erhalten wird während das obere Ende die größere Dicke (S1, 112) aufweist oder im Wesentlichen gleich der Dicke der Folie (104) ist.

## Revendications

1. Membrane à bossages (10a, 10b) drainante et imperméabilisante de sécurité pour des décharges, des mines ou des tunnels, ayant un poids compris entre 400 g/m² et 1500 g/m², d'une tôle en plastique (104) ayant une épaisseur (S1) comprise entre 0,45 mm et 1,6 mm en PEHD, PP ou leurs mélanges, pourvue de bossages de petite taille (100) en forme d'une pyramide tronquée, identiques l'un à l'autre et disposés dans une matrice régulière avec une densité de distribution élevée ; ladite membrane à bossages (10a, 10b) ayant une épaisseur totale (H4) comprise entre 3 mm et 7 mm ; ladite membrane à bossages (10a, 10b) étant **caractérisée en ce qu'**elle a une densité de distribution desdits bossages (100) qui est supérieure à 25000 bossages/m², avec un pas (P4) compris entre 6 mm et 6,8 mm, où chaque bossage (100) a une forme combinée étant composé d'un corps (101) en forme d'une pyramide tronquée qui agit comme une structure portante rigide et d'une tête (102) en forme d'une calotte sphérique (110) déformable, qui (101, 102, 110) sont engrenés et connectés l'un à l'autre de façon à s'affaisser progressivement si soumis à une charge concentrée ; ledit bossage (100) s'affaissant en premier lieu au niveau de ladite tête (102) et seulement à la fin étant pressé à la base (103) dudit corps (101), comme un absorbeur - amortisseur, de façon à redistribuer uniformément les charges parmi les bossages (100) et empêcher qu'ils s'affaissent, également avec un effet anti-obstruction dans le but du drainage et un effet anti-fissure des couches d'interface ; ledit bossage (100), avec la surface interne de la cavité (106, 107) entièrement en forme d'une pyramide tronquée régulière, étant obtenu en formant ladite tôle (104, S1) autour d'un poinçon en forme d'une pyramide tronquée (200) avec une base rectangulaire, ayant la grande base (201) correspondant à l'ouverture (108) de la cavité (107) et la petite base (202) constituant le fond plat (106, 109) de ladite cavité, tandis que sur la face opposée de la tête (102, 105) la surface externe est une calotte sphérique (110) de façon à former sur l'intérieur (102, 106, 107) une réduction progressive de l'épaisseur du matériau (111) comme un étranglement qui cause son affaissement de façon uniforme et progressive ; ladite épaisseur de la tête (102) étant au maximum égale à l'épaisseur de la tôle (S1) au niveau du support supérieur (112), et latéralement où elle est connectée au corps (101, 115) et où, à la base (103) dudit bossage (100), les bords externes (114) ont un rayon (R2) qui est plus grand par rapport au retrait naturel du matériau (R3) de façon à raidir la base (103) par rapport au corps (101).

2. Membrane à bossages (10a, 10b) selon la revendication 1, **caractérisée en ce que** ladite pyramide tronquée, correspondant à la surface interne de la cavité (200, 106, 107), a la grande base (201, 108) avec les côtés (L1) ayant une longueur de 3,4 mm avec une tolérance de ± 1 mm, tandis qu'elle a la petite base (202, 109) avec les côtés (L2) ayant une longueur de 2 mm avec une tolérance de ± 0,5 mm, où la distance (H5) entre lesdites bases (201, 202) est de 4,5 mm avec une tolérance de ± 1,5 mm, avec les bords (203) arrondis en fonction du retrait naturel du matériau ; et où ladite calotte sphérique (110) a un rayon (R1) qui est égal à la moitié dudit côté le plus long (L1), avec une tolérance de ± 10%, et est connectée au bords latéraux (115) dudit corps (101) en forme d'une pyramide tronquée, qui sont arrondis en fonction du retrait naturel du matériau (R3) ; et où, à la base (103) dudit bossage (100), lesdits bords externes (114) ont ledit rayon (R2) égal à la moitié dudit côté (L1) de la grande base (201), avec une tolérance de ± 0,5 mm ; et où ledit pas (P4) entre lesdits bossages (100) est de 6,5 mm, avec une densité de distribution de 25600 bossages/m² et de façon à obtenir 64 bossages dans une partie carrée de membrane ayant un côté de 52 mm, lesdites valeurs étant considérées avec une tolérance de ± 5%.

3. Membrane à bossages (10a, 10b) selon les revendications 1 et 2, **caractérisée en ce qu'**elle a une résistance à la compression (Rc), conformément au standard ASTM D1621-16, qui est comprise entre 800 kN/m² et 4800 kN/m² en fonction de ladite épaisseur (S1) de la tôle en plastique (Fig. 8), la première valeur étant obtenue avec une épaisseur (S1) de 0,45 mm et la deuxième valeur avec une épaisseur (S1) de 1,2 mm, respectivement, où les valeurs intermédiaires sont directement proportionnelles à la variation d'épaisseur avec une tolérance de ± 15%.

4. Membrane à bossages (10b) selon la revendication 1 ou 2 ou 3, **caractérisée en ce qu'**elle a la surface inférieure (106) dans une condition d'appui, qui est pourvue de multiples reliefs antidérapants (116) alignés le long d'un axe médian dudit bossage (100), qui sont parallèles entre eux et discontinus puisqu'ils sont interrompus par lesdites ouvertures (107, 108).

5. Membrane à bossages (10b) selon la revendication précédente, **caractérisée en ce que** lesdits reliefs antidérapants (116) sont en forme de petites protrusions avec une portion toroïdale (Figures 6b, 7), c'est-à-dire, des ailettes arrondies et saillantes, aussi bien transversalement que longitudinalement ; lesdits reliefs antidérapants (116) ayant une épaisseur et une largeur variables qui sont, considérées en coupe transversale au point de saillie maximale, au centre de chaque relief (116), entre une fois et deux fois l'épaisseur (S1) de ladite tôle (104).

6. Membrane à bossages (10a, 10b) selon au moins l'une des revendications précédentes, **caractérisée en ce qu'**elle est industriellement obtenue par un procédé comprenant les phases opérationnelles suivantes : en premier lieu extruder ledit matériau plastique de façon à former une tôle mince (104), en fonction de l'épaisseur (S1) correspondant au poids (Pm) de la membrane finie, et ensuite former ladite tôle autour d'un rouleau de formage pourvu de saillies agissant comme des poinçons (200) de formage, qui ont la forme d'une pyramide tronquée régulière et sont disposés dans une matrice à pas constant (P4), une hauteur (H4) étant prévue entre lesdites bases (201, 202) qui permet d'obtenir l'épaisseur totale souhaitée (H5), en fonction du poids souhaité ; et où la variation d'épaisseur de la tête (102, 109, 110) dans le but de la déformation (113) et de l'affaissement progressif est obtenue avec un rouleau rotatif sous vide et en étirant le matériau extrudé autour de la petite base (202, 109) dudit poinçon (200) pendant la rotation, en le déformant et en l'amincissant avec des étranglements (111) de façon à obtenir une surface externe arrondie en forme d'une calotte sphérique (110) tandis que l'extrémité supérieure a l'épaisseur (S1, 112) la plus grande, c'est-à-dire, elle est substantiellement égale à l'épaisseur de la tôle (104).
